(19) **Europäisches Patentamt**

**European Patent Office**

**Office européen des brevets**

(11) **EP 0 585 714 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(51) Int. Cl.$^6$: **B23H 7/10**, B23H 7/06

(21) Anmeldenummer: **93113114.8**

(22) Anmeldetag: **16.08.1993**

(54) **Elektroerosions-Schneidvorrichtung**

Apparatus for electroerosion cutting

Dispositif pour le découpage par électroérosion

(84) Benannte Vertragsstaaten:
**CH DE FR GB IT LI**

(30) Priorität: **26.08.1992 DE 4228331**

(43) Veröffentlichungstag der Anmeldung:
**09.03.1994 Patentblatt 1994/10**

(73) Patentinhaber: **AG für industrielle Elektronik AGIE Losone bei Locarno
CH-6616 Losone/Locarno (CH)**

(72) Erfinder: **Lodetti, Attilio
CH-6616 Losone (CH)**

(74) Vertreter: **Turi, Michael, Dipl.-Phys. et al
Samson & Partner
Widenmayerstrasse 5
80538 München (DE)**

(56) Entgegenhaltungen:
**EP-A- 0 148 954     EP-A- 0 246 332
CH-A- 655 884     DE-A- 3 715 844
DE-A- 3 926 972**

## Beschreibung

Die Erfindung betrifft eine Vorrichtung zum funkenerosiven Schneiden eines Werkstückes mit einem in wenigstens einer Drahtführung geführten Erodierdraht, wobei - in Drahtvorschubrichtung gesehen - die eine Drahtführung vor und die ggf. andere Drahtführung hinter dem Werkstück angeordnet ist.

Derartige Vorrichtungen bzw. Maschinen oder Anlagen zum elektroerosiven schneiden sind in den vielfältigsten Ausführungsformen bekannt. Eine Elektroerosions-Schneidvorrichtung weist üblicherweise folgende Grundelemente auf: ein Maschinengestell mit Antrieben und Drahtsystem, ein Spülsystem, einen Generator sowie eine NC- oder CNC-Rechnersteuerung. Ausgehend von einer Startbohrung oder einer Referenzfläche wird mit einer ersten Elektrode - dem Erodierdraht - eine Kontur in bzw. aus einer zweiten Elektrode - dem Werkstück - geschnitten.

Im Bearbeitungsbereich (bzw. in der Erodierzone) wird die Drahtelektrode bzw. der Erodierdraht sowohl mit kontrollierter Geschwindigkeit als auch mit definierter Zugspannung bewegt. Um eine zumindest weitgehend exakte Lage des Erodierdrahtes zu gewährleisten, wird dieser (i.A. beidseits des Werkstücks) in den bereits erwähnten Drahtführungen geführt, die üblicherweise in sogenannten "Führungsköpfen" angeordnet sind.

Ein Problem besonderer Art besteht beim elektroerosiven Schneiden in der Entwicklung von Drahtführungen, die für konische Schnitte geeignet sind. Dies gilt insbesondere für Drahtführungen, die in fixen Führungsköpfen angeordnet sind. Für das Schneiden von Winkeln zwischen 0 und 45° haben sich hier klare Grenzen gezeigt. Bei Drahtführungen in sogenannten Schwenkköpfen treten diese Probleme weniger stark auf. Derartige Schwenkköpfe, wie diese beispielsweise aus der CH-A 655884 bekannt sind, sind jedoch relativ teuer.

Die Erfindung zielt darauf ab, bei einer Vorrichtung zum funkenerosiven Schneiden die Höglichkeiten beim Schneiden weiterzuentwickeln, insbesondere das elektroerosive Schneiden koniscner Konturen.

Dieses Ziel erreicht die Erfindung durch den Gegenstand des Anspruches 1.

Eine Grundidee der Erfindung besteht somit darin, wenigstens eine Drahtführung als offene Drahtführung auszulegen und dieser eine zusätzliche geschlossene Toroid-Drahtführung zuzuordnen. Bei Schnitten ohne Konische Neigung und bei solchen mit geringer konischer Neigung gewährleistet die offene Führung eine präzise Führung des Drahtes. Bei größerer konischer Neigung übernimmt die geschlossene Toroid-Drahtführung die Führung des Drahtes: aus einer geschlossenen Toroid-Drahtführung kann ein Draht auch bei großen Konikwinkeln nicht herausfallen.

Zwar sind kombinationen aus offenen Führungen (auch die sogenannten V-Führungen) und geschlossenen Führungen an sich bereits aus der EP-A 0 148 654 bekannt. Die aus dieser kombination bekannten geschlossenen Führungen müssen jedoch - da es sich um sogenannte Ziehsteine handelt - bei unterschiedlich großen verwendeten Drahtdurchmessern jeweils mit ihren Durchmessern angepasst und daher meist zeitaufwendig ausgewechselt werden.

Erfindungsgemäßverwendete Toroidführungen sind Zudem relativ kostengünstig und ermöglichen bei konischen Schnitten größeren Winkels aufgrund ihrer Symmetrie eine definierte Drahtlage.

Bei einem bevorzugten Ausführungsbeispiel der Erfindung ist vorgesehen, die offene(n) und die geschlossene(n) Drahtführung(en) jeweils in einem gemeinsamen Führungskopf anzuordnen (Anspruch 2). Damit braucht der apparative Aufwand zum Aufbau der Führungsköpfe gegenüber bekannten Systemen nur wenig erhöht werden.

Ein weiteres bevorzugtes Ausführungsbeispiel der Erfindung sieht vor, daß ein Drahtlagesensor zwischen der offenen Drahtführung und der geschlossenen Toroid-Drahtführung angeordnet ist (Anspruch 3). Der Drahtlagesensor ermöglicht hier neben seinen sonstigen Vorteilen (siehe z.B. auch die EP-0312056) besonders eine präzise definierte Führung des Drahtes im Übergangsbereich des Drahtes "von der offenen Führung zur geschlossenen". Bereits vorhandene Software zum Einsatz des Drahtlagesensors braucht nicht oder nur um einige entsprechende Routinen ergänzt zu werden.

Eine weitere besonders bevorzugte Ausführungsform der Erfindung weist eine Drahteinfädel-Einrichtung, insbesondere nach Art einer Wasserstrahl-Einfädelung auf (Anspruch 4). Ein Hauptvorteil offener Drahtführungen liegt in der Tatsache, daß in offene Drahtführungen im Gegensatz zu geschlossenen Drahtführungen Drahtelektroden mit beliebigem Durchmesser eingeführt werden können, ohne daß die Führungsköpfe ausgetauscht werden müssen. Zur Gewährleistung einer präzisen Drahtführung mußte dagegen bisher der Durchmesser geschlossener Drahtführungen dem Drahtdurchmesser angepaßt werden.

Damit besitzt die offene Drahtführung große Vorteile bei der automatischen Drahteinfädelung. Bei modernen Erodiermaschinen bzw. Vorrichtungen sollte nämlich eine zumindest weitgehend automatische Drahteinfädeleinrichtung für den Transport des Drahtes vom "oberen" Führungskopf durch eine Startbohrung des Werkstückes zum unteren Führungskopf sorgen. Im Falle der offenen Drahtführung wird die Drahteinfädelung üblicherweise mit Hilfe eines offenen HochdruckWasserstrahles (der eine Art Einfädelkanal darstellt) realisiert. Der Wasserstrahl führt den Draht bei seinem Vorwärtsbewegen in Vorspulrichtung in der gewünschten Richtung vom oberen Führungskopf zum unteren.

Bei der präzise geschlossenen Drahtführung läßt sich ein Wasserstrahl entlang der Drahtführung (Durchmesser der geschlossenen Drahtführung je nach Drahtdurchmesser 0.03 mm <= ∅ <= 0.33 mm) nicht realisieren, so daß für die Einfädelung des Drahtes vom oberen zum unteren Führungskopf andere Systeme in Betracht gezogen werden müssen.

So ist es beispielsweise bekannt, den Draht zu erhitzen, ihn unter Zug zum Reißen zu bringen und anschließend einzufädeln, indem der obere Führungskopf in z-Richtung bewegt und Wasser vom unteren Führungskopf angesaugt wird.

Bei einer anderen Alternative ist es bekannt, den Draht zunächst zu durchtrennen und die Einfädelung vom oberen zum unteren Führungskopf dann mit Hilfe eines externen Systems vorzunehmen.

Manchmal wird die Einfädelung auch mit Hilfe eines Rohres realisiert, durch das der Draht vom oberen zum unteren Führungskopf geschoben wird.

Auch hier schafft die vorliegende Erfindung Abhilfe. Es ist nämlich möglich, die bereits bekannte Wasserstrahl-Einfädeleinrichtung für offene Drahtführungen auch bei der vorliegenden Erfindung anzuwenden. Da die offene Drahtführung für eine präzise Führung des Drahtes bei kleinen Konikwinkeln sorgt, kann der innere Durchmesser der Toroidführung derart groß gewählt werden, daß die Wasserstrahl-Einfädeleinrichtung den Draht auch durch die Toroidführung geleitet und dann einfädelt.

Ein weiterer Vorteil des vorstehend beschriebenen Wasserstrahl-Einfädelsystems für offene Drahtführungen (beispielsweise ebenfalls von der Firma AGIE bekannt) besteht darin, daß es neben den entsprechend ausgelegten Drahtführungsköpfen keine weiteren externen Einrichtungen benötigt. Es erfordert auch keine spezielle Behandlung des Drahtes und ist außerdem äußerst zuverlässig.

Bevorzugt ist der Innendurchmesser der geschlossenen Toroid-Drahtführung wenigstens doppelt so groß wie der Erodierdrahtdurchmesser (Anspruch 5). Noch besser ist es, wenn das Größenverhältnis zwischen dem Innendurchmesser der geschlossenen Drahtführung (4,4') und dem Erodierdrahtdurchmesser vorzugsweise etwa 10 zu 1 beträgt (Anspruch 6). Der besonders bevorzugte Innendurchmesser liegt bei ca. 2,5mm, ein üblicherweise verwendeter Erodierdraht hat einen Durchmesser von ca. 0,3mm. Damit wird die Bedingung "10 zu 1" in etwa erfüllt. Erodierdrähte sind bei einer derartigen Auslegung der Toroidführungen zuverlässig mit der Wasserstrahl-Einfädeleinrichtung einfädelbar.

Bei einer weiteren bevorzugten Ausgestaltung der Erfindung ist der Abstand zwischen der offenen und der geschlossenen Drahtführung so groß, daß der Draht bei konischen Schnitten mit einem Konikwinkel ($\alpha$) bis ca. 2° in der offenen, bei größeren Konikwinkeln ($\alpha$) dagegen in der geschlossenen Drahtführung geführt ist (Anspruch 7). Dies schließt selbstverständlich ein, daß die präzise V-Führung die Führung des Drahtes bei einem Konikwinkel von 0° - also bei einem senkrechten Schnitt - übernimmt. Bei größeren Konikwinkeln kommt dagegen die geschlossene Führung zum Einsatz. Der Führungskopf muß damit nicht mehr schwenkbar ausgelegt werden, was zu niedrigeren Herstellkosten führt.

Zusammenfassend realisiert die Erfindung insbesondere folgende Vorteile:

- Vermeidung des Austausches der Drahtführung bei unterschiedlichem $\varnothing$ des Drahtes, woraus weniger Maschinenstillstand resultiert.
- Vermeidung der Schrägstellung der Führungsköpfe bei konischem Schnitt im Falle der offen Drahtführung, womit sich niedrigere Anlagenkosten ergeben.
- Es werden weitere Operationen zur Einfädelung des Drahtes vermieden, womit sich die Funktions-Zuverlässigkeit erhöht.

Weitere bevorzugte Merkmale und Vorteile der Erfindung ergeben sich aus der nachfolgenden Beschreibung bevorzugter Ausführungsbeispiele. Diese Ausführungsbeispiele sind schematisch in den beigefügten Zeichnungen dargestellt, die auch den Unterschied zwischen erfindungsgemäßen Vorrichtungen und dem bereits geschilderten Stand der Technik veranschaulichen.

Es zeigen:

Fig. 1    eine schematische Schnittansicht einer erfindungsgemäßen Kombination aus einer V-Führung und einer Toroidführung;

Fig. 2    eine schematische Schnittansicht einer erfindungsgemäßen Kombination aus einer V-Führung und einer Toroidführung beidseits eines zu schneidenden Werkstückes; und

Fig. 3    eine schematische Schnittansicht eines weiteren Ausführungsbeispiels der Erfindung.

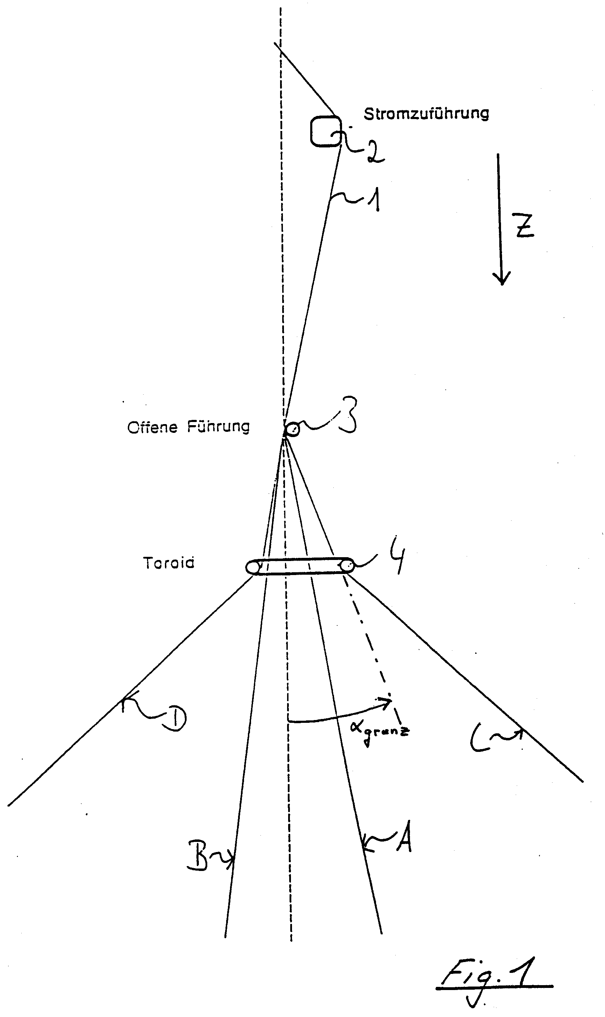

Zunächst sei das erste Ausführungsbeispiel der Fig. 1 beschrieben. Dabei wird im folgenden eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter auf Maschinen üblicher Arbeitsaufstellung und Größe sowie auf in üblicher Weise angeordnete Werkstücke.

Fig. 1 beschränkt sich auf eine rein schematische Darstellung erfindungswesentlicher Teile eines Führungskopfes einer erfindungsgemäßen Elektroerosions-Schneidvorrichtung. Grundelemente wie Maschinengestell mit Antrieben und Drahtsystem, Spülsystem, Generator sowie eine CNC-Rechnersteuerung sind nicht dargestellt, da sie als selbstverständlich gelten.

Ein Erodierdraht 1 wird in der durch einen Pfeil Z dargestellten Drahttransportrichtung von "oben" nach "unten" vorgespult. Eine erste Stromzuführung 2 dient in üblicher Weise zur Zuführung der vom (nicht dargestellten) Generator der Elektroerosions-Schneidvorrichtung abgegebenen elektrischen Impulse. Die Stromzuführung 2 sorgt auch für eine gewisse Vorspannung des Erodierdrahtes 1 im Bezug zur gestrichelt gezeichneten Senkrechten. Hinter der Stromzuführung 2 ist im Bezug auf die Drahtvorspulrichtung Z eine offene Drahtführung 3 angeordnet.

Der Erodierdraht 1 liegt in seiner Ruhelage (gestrichelte Linie) so tief wie möglich im V der Führung 3 ein (Anm: Von der offenen Führung ist hier nur ein Querschnitt durch den tiefsten "Punkt" des V dargestellt). In Drahtvorspulrichtung Z gesehen ist "hinter" der offenen Drahtführung 3 eine geschlossene Drahtführung - eine Toroidführung 4 - angeordnet. Die Toroidführung 4 ist damit der offenen Drahtführung 3 im Sinne des Anspruches 1 "zugeordnet".

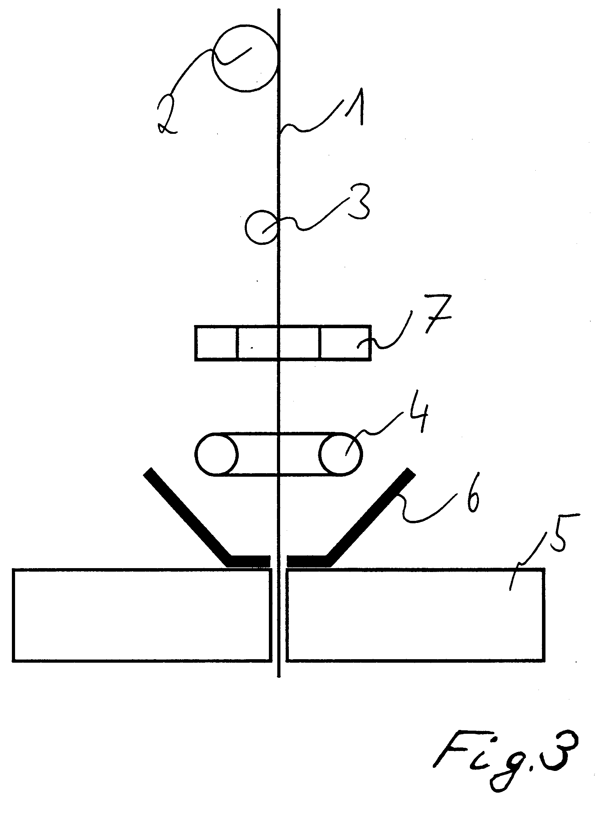

Bei Schnitten mit einem Neigungs- bzw. Konikwinkel $\alpha < \alpha_{grenz}$ (beispielsweise 2°) zur Ruhelage (gestrichelt) übernimmt die offene Führung 3 die Führung des Drahtes (Anm.: der Maßstab der Fig. dient lediglich dem besseren Verständnis der Erfindung). Bei derart kleinen Konikwinkeln fällt der Erodierdraht auch ohne eine Schwenkbarkeit eines zugeordneten Führungskopfes 6 (siehe Fig. 3) wegen seiner "Vorspannung" nicht aus der offenen Führung 3 heraus (siehe beispielsweise die Drahtlagen A und B). Bei größeren Konikwinkeln übernimmt dagegen die Toroidführung die Drahtführung (siehe die Drahtlagen C und D).

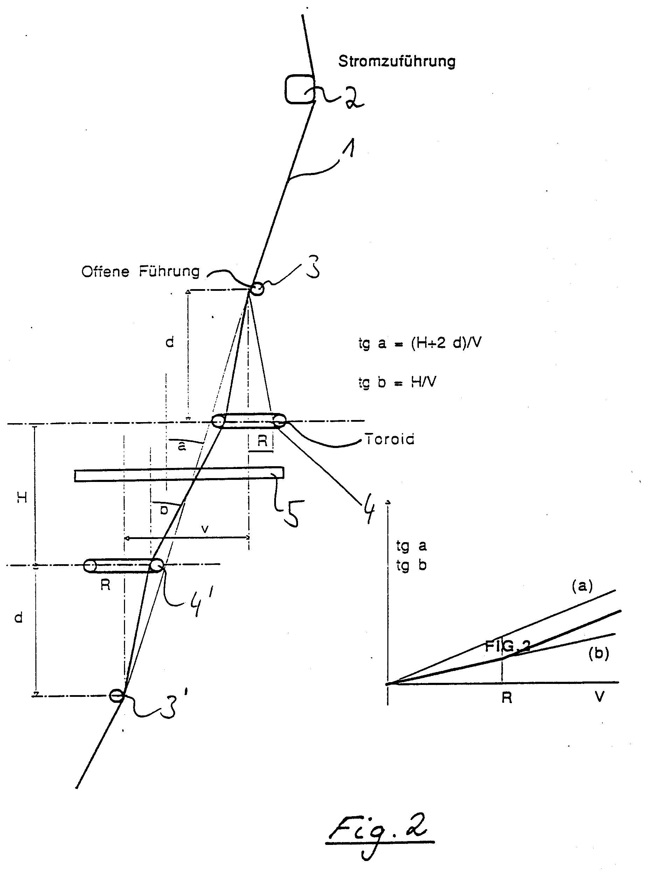

Die Wirkungsweise der Erfindung ist besonders gut in Fig. 2 zu erkennen. Fig. 2 zeigt eine erfindungsgemäße Kombination aus einer offenen Drahtführung 3, 3' und einer Toroidführung 4, 4' beidseits eines zu bearbeitenden Werkstückes 5. Bei größeren Konikwinkeln kann der Erodierdraht aus den Toroidführungen 4,4' nicht herausfallen. Bei kleinen konischen Winkeln - genauer gesagt bei Winkeln, die kleiner sind als der Öffnungswinkel zwischen einer Geraden durch den letzten Drahtanlagepunkt "vor" der Toroidführung 4,4' und einem Punkt auf dem Innenrand des Toroides 4,4' und der Mittelsenkrechten durch den Toroid 4,4' - übernehmen dagegen die offenen Führungen 3, 3' die Führung des Erodierdrahtes 1. Der Draht 1 ist auch bei sehr kleinen Winkeln sicher geführt.

Zusätzliche Präzision schafft ein Drahtlagesensor 7 (siehe Fig. 3). Dieser Drahtlagesensor 7 ermöglicht insbesondere eine präzise Führung beim Wechsel zwischen den beiden Führungen. Dieser Wechsel erfolgt sozusagen an der Stelle V=R. Dabei ist V:=Abstand der zentralen, jeweils im Ausführungsbeispiel der Fig. 2 senkrechten Achsen der Toroide 4, 4' voneinander und R:=Radius des Toroides 4, 4'. Der Abstand der Toroide 4, 4' voneinander ist nämlich kleiner als der Abstand der offenen Führungen 3, 3' (in Fig. 2 um die Distanz 2d, d:=Abstand Toroid <-> offene Führung). An der Stelle V=R "springt" die Funktion zur Berechnung eines Konizitätswinkels aus dem Versatz der oberen und unteren Führungen 3,4 und 3',4' zueinander zwar theoretisch - wenn man die Anlagestellen des Drahtes als punkt- oder linienförmig betrachtet - von der Funktion a=arctg[(H+2d)/V] auf die Funktion b=arctg[H/V] und umgekehrt. Da die Näherung der punktartigen Anlage des Drahtes in den Drahtführungen real natürlich nicht zutrifft, ist der Übergang stetig. Dieser Bereich ist bei ev.

Bedarf durch den Drahtlagesensor 7 kontrollierbar. Schleppfehler bei einem Richtungswechsel sind durch den Drahtlagesensor 7 ausgleichbar. Auch die Genauigkeit bei größeren Konikwinkeln (wenn der Toroid zum Einsatz kommt) kann durch den Drahtlagesensor 7 weiter erhöht werden.

Vorteilhaft ist das Drahtablenkungs-Meßsystem mit Hilfe des Drahtlagesensors 7 zwischen den beiden Drahtführungen 3, 4 angeordnet.

Wie aus zuvor erläuterten Formeln entnehmbar ist, kommt es bei dem Übergang der eigentlichen Führung des Drahtes 1 bei kleinen Winkeln einerseits durch die offene Drahtführung 3,3', bei größeren Winkeln andererseits durch die geschlossene Drahtführung 4,4' wesentlich darauf an, welchen Abstand die offene Drahtführung 3,3' von der geschlossenen Drahtführung 4,4' aufweist. In dem Ausführungsbeispiel der Fig. 2 ist ganz klar die Abhängigkeit des Konizitätswinkels von diesem Abstand d erkennbar. Wird die geschlossene Drahtführung 4,4' in einer Art vertikaler Parallelverschiebung der offenen Drahtführung 3,3' bei gespanntem Draht 1 genähert, so verläuft der Draht 1 automatisch nach dieser Annäherung der Drahtführung 4,4' in Richtung Drahtführung 3,3' steiler durch das zu schneidende Werkstück 5. Demzufolge wird der Konizitätswinkel bei dieser Annäherung der Drahtführung 4,4' in Richtung Drahtführung 3,3'entsprechend geringer.

Um diesem Umstand Rechnung zu tragen, ist die erfindungsgemäße CNC-Steuerung so ausgelegt, daß sie den Abstand d automatisch je nach Art des in ihr programmierten Konus berücksichtigt und die erforderlichen Korrekturen von sich aus vornimmt. Dabei mißt vorzugsweise eine Detektiereinrichtung - wie sie beispielsweise zur üblichen Kontaktermittlung in der Funkenerosion bekannt ist - , ob ein Kontakt des Drahtes 1 mit der geschlossenen Drahtführung 4,4' vorliegt. Aus dem daraus ermittelbaren Winkel des Drahtes 1 relativ zur geschlossenen Drahtführung 4,4' kann in Kenntnis der gleichbleibenden Achslage der geschlossenen Drahtführung 4,4'der Abstand d zwischen geschlossener und offener Drahtführung 4,4' und 3,3' ermittelt und der CNC-Steuerung mitgeteilt werden. Diese nimmt dann von sich aus die erforderlichen Korrekturen in Bezug auf den gewünschten Konizitätswinkel vor.

Vorteilhaft kann die Position des Drahtes 1 innerhalb der geschlossenen Drahtführung 4, 4' durch das Meßergebnis des Drahtlagesensors 7 so korrigiert werden, daß man beim konischen Schnitt (über 2°) immer die programmierte Form erhält (unter der eventuellen Zuhilfenahme einer Korrektursoftware).

Nach dem Stand der Technik wurde bisher der Durchmesser der Toroidführung dem des Erodierdrahtes 1 so weit wie möglich angepaßt. Bei Verwendung eines Erodierdrahtes 1 geringeren Durchmessers war diese Anpassung jedoch bereits wieder zunichte, weil dann bei kleinen Konikwinkeln keine definierte Führung des Drahtes in der geschlossenen Führung erfolgte. Ganz abgesehen sei dabei von den mit einer engen Toroidführung verbunden Schwierigkeiten beim automatischen Drahteinfädeln.

Die Erfindung löst hier auch das Problem des Drahteinfädelns: und zwar durch einen relativ großen Durchmesser der Toroidführung(en) 4,4'. Es ist möglich, ein von offenen V-Führungen 3,3' bekanntes Einfädelsystem mit Wasserstrahl (nicht dargestellt) beizubehalten. Die ringförmigen (toroidalen) und damit geschlossenen Drahtführungen 4,4' weisen einen derart großen Innendurchmesser (z.B. ca. 2.5 mm) auf, daß der Durchlauf des Einfädel-Wasserstrahls problemlos möglich ist.

Fig. 3 zeigt schematisch den Aufbau eines (in der Fig. nur angedeuteten) Führungs- bzw. Bearbeitungskopfes 6 (hier der "obere" Führungskopf). Alle wesentlichen Elemente sind in den Führungskopf 6 integrierbar (so die offene Führung 3, die geschlossene Führung 4 und der Drahtlagesensor 7). Die bisherigen Funktionen der Führungsköpfe 6 können bei der Erfindung beibehalten werden. Insbesondere eine nicht dargestellte Drahtschere und eine Einrichtung zur Überwachung der Präsenz des Drahtes 1 können in den Führungsköpfen 6 enthalten sein.

**Patentansprüche**

1. Vorrichtung zum funkenerosiven Schneiden eines Werkstückes mit einem in wenigstens einer Drahtführung (3, 3') geführten Erodierdraht (1), wobei - in Drahtvorschubrichtung gesehen - die eine Drahtführung (3) vor und die gegebenenfalls andere Drahtführung (3') hinter dem Werkstück (5) angeordnet ist, die wenigstens eine Drahtführung (3, 3') eine offene Drahtführung, insbesondere eine V-Führung ist, der wenigstens eine zusätzliche, geschlossene Toroid-Drahtführung (4, 4') zugeordnet ist, deren Durchmesser so groß ist, daß der Erodierdraht (1) beim vertikalen Durchgang durch diese Toroid-Drahtführung (4, 4') mit deren Innenflächen nicht in Berührung gelangt, wobei die Toroid-Drahtführung (4, 4') zwischen der offenen Drahtführung (3, 3') und dem Werkstück (5) angeordnet ist.

2. Vorrichtung nach Anspruch 1 dadurch gekennzeichnet, daß die offene(n) und die geschlossene(n) Drahtführung(en) (3,3' und 4,4') jeweils in einem gemeinsamen Führungskopf (6) angeordnet sind.

3. Vorrichtung nach Anspruch 2, dadurch gekennzeichnet, daß ein Drahtlagesensor (7) zwischen der oberen offenen Drahtführung (3) und der geschlossenen Drahtführung (4) angeordnet ist.

4. Vorrichtung nach einem der Ansprüche 1 bis 3, gekennzeichnet durch eine Drahteinfädel-Einrichtung, insbesondere nach Art einer Wasserstrahl-Einfädelung.

5. Vorrichtung nach einem der Ansprüche 1 bis 4, dadurch gekennzeichnet, daß der Innendurchmesser der geschlossenen Drahtführung (4,4') wenigstens doppelt so groß ist wie der Erodierdrahtdurchmesser.

6. Vorrichtung nach Anspruch 5, dadurch gekennzeichnet, daß das Größenverhältnis zwischen dem Innendurchmesser der geschlossenen Drahtführung (4,4') und dem Erodierdrahtdurchmesser vorzugsweise etwa 10 zu 1 beträgt.

7. Vorrichtung nach einem der Ansprüche 1 bis 6, dadurch gekennzeichnet, daß der Abstand zwischen der/den offenen und der/den geschlossenen Drahtführung(en) (3,3' und 4,4') jeweils so groß ist, daß der Draht bei konischen Schnitten mit einem Schnittwinkel ($\alpha$) bis ca. 2° in der offenen, bei größeren Schnittwinkeln ($\alpha$) dagegen in der/den geschlossenen Drahtführung(en) (4, 4') geführt ist.

8. Vorrichtung nach einem der vorstehenden Ansprüche, gekennzeichnet durch eine Steuerungseinrichtung, insbesondere eine CNC- Steuerung, die den Abstand d zwischen der/den offenen Drahtführung(en)(3,3') und der/den geschlossenen Drahtführung(en) (4,4') automatisch je nach Art der Programmierten Konik berücksichtigt.

9. Vorrichtung nach Anspruch 8, gekennzeichnet durch eine Detektiereinrichtung, die den Kontakt des Drahtes (1) mit der geschlossenen Drahtführung (4,4') feststellt, vorzugsweise eigenständig den Abstand d zwischen der/den geschlossenen und der/den offenen Drahtführung(en)(4,4' und 3,3') ermittelt und den Wert für den Abstand d der Steuerungseinrichtung mitteilt.

**Claims**

1. Device for the cutting by spark erosion of a workpiece having an eroding wire (1) guided in at least one wire guide (3, 3'), the single wire guide (3) being arranged in front of the workpiece (5), viewed in the wire feed direction, and if the occasion arises the other wire guide (3') being arranged behind the workpiece, the at least single wire guide (3, 3') being an open wire guide, especially a V-guide, to which is assigned at least one additional closed toroidal wire guide (4, 4') the diameter of which is of such a size that the eroding wire (1) in its vertical passage through this toroidal wire guide (4, 4') does not come into contact with the inner surfaces of the latter, the toroidal wire guide (4, 4') being arranged between the open wire guide (3, 3') and the workpiece (5).

2. Device according to Claim 1, characterised in that the open guide(s) and the closed guide(s) (3, 3' and 4, 4') are each arranged in a common guide head (6).

3. Device according to Claim 2, characterised in that a wire position sensor (7) is arranged between the upper open wire guide (3) and the closed wire guide (4).

4. Device according to one of the Claims 1 to 3, characterised by a wire threading device, especially according to the type of a water-jet threading system.

5. Device according to one of the Claims 1 to 4, characterised in that the internal diameter of the closed wire guide (4, 4') is at least twice as large as the diameter of the eroding wire.

6. Device according to Claim 5, characterised in that the size ratio between the internal diameter of the closed wire guide (4, 4') and the diameter of the eroding wire amounts preferably to approximately 10 to 1.

7. Device according to one of the Claims 1 to 5, characterised in that the distance between the open wire guide(s) and the closed wire guide(s) (3, 3' and 4, 4') is of such a size in each case that in the case of conical cuts having a cut angle ($\alpha$) of up to about 2° the wire is guided in the open wire guide(s), whereas in the case of larger cut angles ($\alpha$) it is guided in the closed wire guide(s) (4, 4').

8. Device according to one of the preceding claims, characterised by a control device, especially a CNC control system, which takes account of the distance d between the open wire guide(s) (3, 3') and the closed wire guide(s) (4, 4') automatically according to the type of programmed conical shape.

9. Device according to Claim 8, characterised by a detecting device which establishes the contact of the wire (1) with the closed wire guide (4, 4'), determines preferably independently the distance d between the closed wire guide(s) and open wire guide(s) (4, 4' and 3, 3') and communicates the value for the distance d to the control device.

**Revendications**

1. Dispositif de coupe par étincelage d'une pièce d'usinage, comprenant un fil à érosion (1) passant au moins dans un guidage (3, 3') du fil, où - vu dans le sens de dévidage du fil - un guidage (3) du fil est placé devant la pièce d'usinage (5) et où, le cas échéant, l'autre guidage de fil (3') est placé derrière cette pièce d'usinage, où au moins un guidage (3, 3') du fil est un guidage ouvert du fil, notamment un guidage en V, auquel est adjoint, en supplément, un guidage toroïdal fermé (4, 4') dont le diamètre est tel que le fil à érosion (1), en passant verticalement à travers ce guidage toroïdal (4, 4') du fil, ne vient pas en contact avec ses surfaces intérieures, où le guidage toroïdal (4, 4') du fil est disposé entre le guidage ouvert (3, 3') du fil et la pièce d'usinage (5).

2. Dispositif selon la revendication 1, caractérisé en ce que le ou les guidages ouverts (3, 3') et fermés (4, 4') sont respectivement disposés dans une tête commune de guidage (6).

3. Dispositif selon la revendication 2, caractérisé en ce qu'un capteur (7) de position du fil est disposé entre le guidage ouvert supérieur (3) du fil et le guidage fermé (4) du fil.

4. Dispositif selon l'une quelconque des revendications 1 à 3, caractérisé par un dispositif d'enfilage du fil, notamment suivant la technique d'enfilage par jet d'eau.

5. Dispositif selon l'une quelconque des revendications 1 à 4, caractérisé en ce que le diamètre intérieur du guidage fermé (4, 4') du fil est au moins le double du diamètre du fil à érosion.

6. Dispositif selon la revendication 5, caractérisé en ce que le rapport de proportion entre le diamètre intérieur du guidage fermé (4, 4') du fil et le diamètre du fil à érosion est, de préférence, de 10 à 1 environ.

7. Dispositif selon l'une quelconque des revendications 1 à 6, caractérisé en ce que la distance $d$ entre le ou les guidages ouverts (3, 3') du fil et le ou les guidages fermés (4, 4') du fil est respectivement d'une dimension telle que le fil, dans le cas de coupes coniques avec un angle de coupe ($\alpha$) allant jusqu'à 2° environ, passe dans le ou les guidages ouverts (3, 3') du fil mais, par contre, qu'il passe dans le ou les guidages fermés (4, 4') du fil dans le cas d'angles de coupe ($\alpha$) plus grands.

8. Dispositif selon l'une quelconque des revendications précédentes, caractérisé par un dispositif de commande, notamment une commande numérique par ordinateur (CNC) qui tient compte automatiquement de la distance $d$ entre le ou les guidages ouverts (3, 3') du fil et le ou les guidages fermés (4, 4') du fil, en fonction de la conicité programmée.

9. Dispositif selon la revendication 8, caractérisé par un dispositif de détection qui constate le contact du fil (1) avec le guidage fermé (4, 4') du fil, qui calcule, de préférence de façon autonome, la distance $d$ entre le ou les guidages fermés (4, 4') du fil et le ou les guidages ouverts (3, 3') du fil, et qui communique au dispositif de commande la valeur de la dis-

tance *d*.

Fig. 1

Stromzuführung

Offene Führung

tg a = (H+2 d)/V

tg b = H/V

Toroid

tg a
tg b

(a)

FIG. 2

(b)

R          V

*Fig. 2*

Fig.3